# EUROPÄISCHE PATENTANMELDUNG

(11) **EP 0 835 787 A1**
(43) Veröffentlichungstag der Anmeldung: **15.04.1998**
(21) Anmeldenummer: 97117326.5
(22) Anmeldetag: 07.10.1997
(51) Int. Cl.: B60R 21/16

(54) **Gassack für ein Fahrzeuginsassen-Rückhaltesystem**

(30) Priorität: 09.10.1996 DE 29617586 U; 04.12.1996 DE 29621077 U
(71) Anmelder: TRW Occupant Restraint Systems GmbH, 73551 Alfdorf (DE)
(72) Erfinder: Bosio, Allen Charles, 73575 Leinzell (DE); Ellerbrok, Norbert, 73553 Alfdorf (DE); Denz, Stefan, 79713 Bad Säckingen (DE); Sombrutzki, Siegfried, 73553 Alfdorf (DE)
(74) Vertreter: Kitzhofer, Thomas, Dipl.-Ing.

(57) **Zusammenfassung**

Ein Gassack für ein Fahrzeuginsassen-Rückhaltesystem, mit einer Gassackwandung (3), die wenigstens eine Ausströmöffnung (9) aufweist, welche durch ein sie abdeckendes, an der Gassackwandung (3) befestigtes Materialstück bis zu einem vorbestimmten Gassackinnendruck verschlossen ist und bei einem Überschreiten des Innendrucks durch Aufreißen des Materialstücks freigegeben wird, ist dadurch gekennzeichnet, daß das Materialstück eine Folie (11) ist.

## Beschreibung

Die Erfindung betrifft einen Gassack für ein Fahrzeuginsassen-Rückhaltesystem, mit einer Gassackwandung, die wenigstens eine Ausströmöffnung aufweist, welche durch ein sie abdeckendes, an der Gassackwandung befestigtes Materialstück bis zu einem vorbestimmten Gassackinnendruck verschlossen ist und bei einem Überschreiten des Innendrucks durch Aufreißen des Materialstücks freigegeben wird.

Ein gattungsgemäßer Gassack ist bereits aus der EP 0 495 410 A1 bekannt. Die dabei vorgesehenen Ausstömöffnungen dienen dazu, den Gassackinnendruck zu begrenzen, und insbesondere dazu, den Gassack nach dem Aufprall des Fahrzeuginsassen am Ende des Fahrzeug-Stauchweges weicher zu machen. Zum definierten Aufreißen weisen die durch Materialstücke überdeckten Ausströmöffnungen Aufreißlinien auf, die z.B. durch eine Perforation oder durch Reißnähte geschlossene Schlitze gebildet sind. Die Materialstücke reißen ab einem vorbestimmten Gassackinnendruck auf und legen die Ausströmöffnungen frei. Insbesondere beim Vorsehen von Reißnähten ergibt sich jedoch das Problem, daß der definierte Gassackinnendruck, der zum Reißen der Naht führt, von Gassack zu Gassack schwanken kann. Es bedarf deshalb hoher Herstellungsgenauigkeiten, um diese Schwankungen in möglichst engen Grenzen zu halten.

Die US 4 805 930 zeigt einen Gassack mit einer Ausströmöffnung, die durch ein kunststoffbeschichtetes Gewebestück verschlossen ist. Bei hohem Druck verschieben sich die einzelnen Fäden des Gewebestücks so stark zueinander, daß die Kunststoffschicht an zahlreichen Stellen reißt und viele kleine Ausströmöffnungen gebildet werden. Die Öffnungen sind jedoch relativ klein, so daß ein schneller Druckabfall im Gassack kaum erreicht werden kann. Aufgrund von nicht auszuschließenden Fertigungstoleranzen bezüglich des Gewebes und der Beschichtung schwankt der Gassackinnendruck, ab dem die Öffnung freiliegt, von Gassack zu Gassack erheblich.

Die Erfindung schafft einen einfach herzustellenden Gassack, bei dem der vorbestimmte Innendruck, ab dem die Ausströmöffnung freiliegt, in engen, sehr genau vorbestimmbaren Grenzen gehalten werden kann. Bei einem Gassack der eingangs genannten Art wird dies erfindungsgemäß dadurch erreicht, daß das Materialstück eine Folie ist. Im Gegensatz zu den bislang verwendeten beschichteten oder unbeschichteten Gewebelagen kann eine Folie so hergestellt werden, daß sie aufgrund ihrer exakt herstellbaren Dicke bei einem gewünschten auf sie einwirkenden Druck reißt. Darüber hinaus können, z.B. durch Änderung der Foliendicke auf einfache Weise Gassäcke mit unterschiedlichen vorbestimmten Gassackinnendrücken, bei denen die Ausströmöffnung freigelegt werden soll, hergestellt werden.

Die Folie kann eine Metall- oder Kunststoffolie sein, die auf die Gassackwandung innen- oder außenseitig aufgenäht, geklebt oder aufgeschweißt ist.

Aufreißlinien in der Folie sorgen für einen definierten Öffnungsvorgang und verhindern, daß die Folie so reißt, daß lose Einzelteile entstehen, die in Richtung des Fahrzeuginsassen fliegen könnten.

Anstatt der oder zusätzlich zu den Aufreißlinien kann die Folie einen im Bereich der Ausströmöffnung liegenden Flächenabschnitt mit verringerter Dicke gegenüber dem verbleibenden Flächenabschnitt aufweisen. Die Folie reißt damit im dünneren Flächenabschnitt auf.

Um zu verhindern, daß die Folie im Bereich ihrer Befestigung reißt, ist bei einer bevorzugten Ausführungsform ein am Gassack angenähter, angeklebter oder angeschweißter, die Ausströmöffnung umgebender Verstärkungsring vorgesehen. Die Folie ist zwischen dem Verstärkungsring und der Gassackwandung angeordnet und an beiden Teilen befestigt. Zur gleichmäßigen Einleitung der Kraft beim Entfalten des Gassacks in die Folie weist der Verstärkungsring einen Innendurchmesser auf, der größer als der Durchmesser der in der Gassackwandung vorgesehenen Ausströmöffnung ist.

Die Lage der Folie muß zur Ausströmöffnung und zum Verstärkungsring, falls ein solcher vorgesehen ist, exakt ausgerichtet sein, damit die Folie auch an ihrem gesamten Rand umlaufend an der Gassackwandung befestigt ist. Eine Positionieröffnung in der Folie erleichtert das Ausrichten der Folie relativ zu der Ausströmöffnung. Da der Durchmesser der Positionieröffnung sehr gering sein kann, hat sie keine wesentlichen Auswirkungen auf den Verlauf des Gassackinnendrucks.

Weitere Merkmale und Vorteile der Erfindung ergeben sich aus der nachfolgenden Beschreibung und aus den nachfolgenden Zeichnungen, auf die Bezug genommen wird.

In den Zeichnungen zeigen:
- Fig. 1 den zeitlichen Verlauf des Überdrucks im Gassackinneren beim erfindungsgemäßen Gassack und bei einem bekannten Gassack, der eine stets freigelegte Ausströmöffnung aufweist,
- Fig. 2 eine Ausführungsform des erfindungsgemäßen Gassacks in aufgeblasenem Zustand,
- Fig. 3 den Gassack nach Fig. 2 mit gerissener Folie,
- Figuren 4a bis 4c Folien mit unterschiedlich geformten Einprägungen,
- Figuren 5a und 5b einen Querschnitt durch eine zweite Ausführungsform des erfindungsgemäßen Gassacks im Bereich der Ausströmöffnung bei geringem bzw. hohem Gassackinnendruck,
- Figur 6 einen Querschnitt durch eine dritte Ausführungsform des erfindungsgemäßen Gassacks im Bereich der Ausströmöffnung in nicht aufgeblasenem Zustand,
- Figur 7 einen quadratischen Ausschnitt der Gassackwandung im Bereich der Ausströmöffnung, wobei die Folie nur in einzelnen Bereichen an der Gassackwandung befestigt ist,
- Figur 8 einen Querschnitt durch die Gassackwandung im Bereich der Ausströmöffnung nach Figur 7,
- Figur 9 einen quadratischen Ausschnitt der Gassackwandung im Bereich der Ausströmöffnung gemäß einer weiteren Ausführungsform,
- Figur 10 einen Querschnitt durch die Gassackwandung im Bereich der Ausströmöffnung gemäß Figur 9, und
- Figur 11 die rechte Hälfte eines aufgeblasenen Gassacks mit einem abgenähten Bereich.

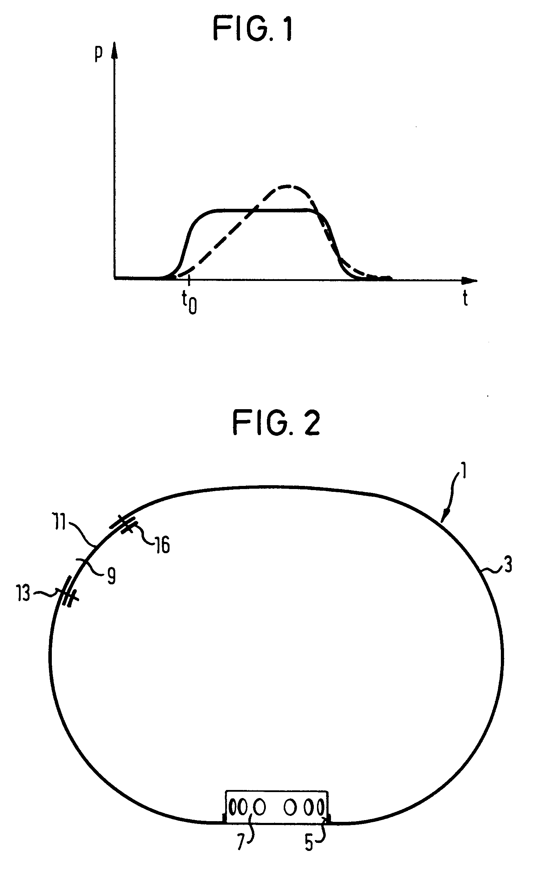

In Fig. 1 ist der Verlauf des Drucks im Inneren eines Gassack während des Entfaltungsvorgangs gezeigt. Mit unterbrochenen Linien ist der Druckverlauf bei einem herkömmlichen Gassack dargestellt, dessen Ausströmöffnung stets freigelegt ist. Da die Ausströmöffnung auch zu Beginn des Entfaltungsvorganges bereits offen ist, steigt der Druck im Gassack langsam und stetig an, um nach Erreichen eines Maximums wieder abzufallen.

Beim erfindungsgemäßen Gassack hingegen steigt der Druck nach dem Zünden eines pyrotechnischen Gasgenerators bis dem Reißen der Folie zum Zeitpunkt t_{O} schlagartig an und verharrt bei einem maximalen Überdruck, der geringer als der maximale Überdruck in bislang üblichen Gassäcken bei gleichem Querschnitt der Ausströmöffnung und ansonsten gleichen Rahmenbedingungen ist. Dadurch wird der Gassackinnendruck auf ein geringeres Maß begrenzt, und der Gassack wird am Ende des Fahrzeug-Stauchweges weich und kann Energie absorbieren.

Der in Fig. 2 gezeigte Gassack 1 umfaßt eine Gassackwandung 3 mit einer Einblasöffnung 5, in die ein Gasgenerator 7 ragt. Die Gassackwandung 3 weist mehrere Ausströmöffnungen auf, von denen nur eine Ausströmöffnung, die mit 9 bezeichnet ist, gezeigt ist. Die Ausströmöffnung 9 wird von einem an der Innenseite der Gassackwandung 3 anliegenden Materialstück in Form einer Aluminiumfolie 11 abgedeckt und verschlossen. Die Folie 11 ist hierzu an ihren Rändern mit einer umlaufenden Naht 13 an der Gassackwandung 3 befestigt.

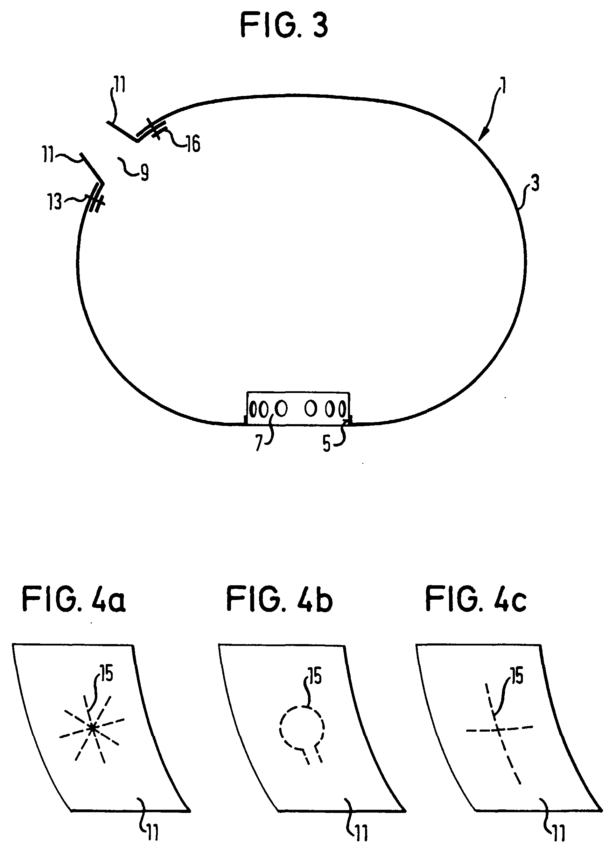

Innenseitig wird die Folie 11 von einem Verstärkungsring 16 aus Gassackgewebematerial umgeben, dessen Innendurchmesser größer als der Durchmesser der in der Gassackwandung 3 vorgesehenen Ausströmöffnung 9 ist. Der Verstärkungsring 16 verhindert ein Ausreißen der Folie 11 an der Naht 13, da die Folie 11 zwischen dem Verstärkungsring 16 und der Gassackwandung 3 gehalten ist. Die Krafteinleitung in die Folie 11 bei erhöhtem Innendruck folgt dadurch großflächiger und nicht nur im Bereich der Nahtstiche. Der Verstärkungsring 16 ist bei der in den Figuren 2 und 3 gezeigten Ausführungsform mit einer umlaufenden Naht 13 zusammen mit der Folie 11 an der Gassackwandung 3 befestigt, wobei jedoch auch mehrere Nähte vorgesehen sein können, die der Befestigung des Verstärkungsrings 16 oder der Folie 11 aneinander oder an der Gassackwandung 3 dienen. Wie bei Versuchen überraschend herausgefunden wurde, verhindert der Verstärkungsring 16 insbesondere dann das Reißen der Folie 11 im Bereich der Naht 13, wenn sein Innendurchmesser ungleich, insbesondere größer als der Durchmesser der in der Gassackwandung 3 vorgesehenen Ausströmöffnung 9 ist. Der Verstärkungsring 16 ist aus Gassackgewebematerial gefertigt.

Beim Aufblasen des Gassacks 1 strömt kein Gas aus diesem aus, solange der vorbestimmte Gassackinnendruck nicht erreicht ist.

Die Dicke der Aluminiumfolie 11 ist so auf die Geometrie der Ausströmöffnung 9 abgestimmt, daß sie erst ab Erreichen des vorbestimmten Gassackinnendrucks reißt, wie in Fig. 3 gezeigt. Die Nähte 13 halten die Einzelteile der Folie 11 am Gassack 1 fest, so daß diese nicht in Richtung des Fahrzeuginsassen geschleudert werden können.

Um das Freigeben der Ausströmöffnung 9 noch exakter vorbestimmen zu können, kann die Aluminiumfolie 11 mit Einprägungen 15 versehen sein.

Die Einprägungen 15, die Aufreißlinien bilden, können verschiedene Formen einnehmen, z.B. eine Sternform (vgl. Fig. 4a), eine teilkreis- oder löffelartige Form (vgl. Fig. 4b) oder eine Kreuzform (vgl. Fig. 4c). Allen diesen Formen ist jedoch gemeinsam, daß keine losen Einzelteile entstehen können, sondern daß alle nach dem Reißen der Folie 11 entstehenden Einzelteile am Gassack 1 befestigt bleiben.

Die Folie kann gegebenenfalls mit einer hitzebeständigen Beschichtung versehen sein.

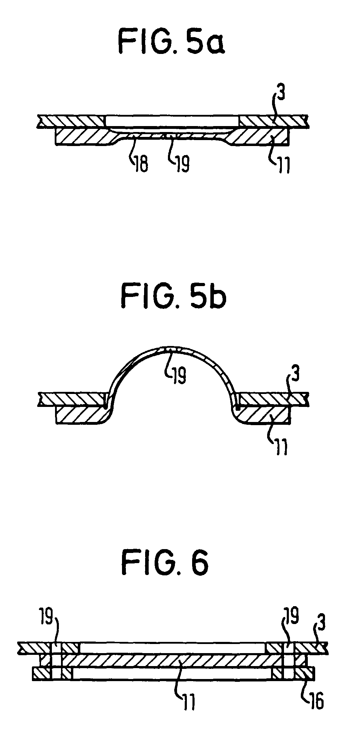

In der in Figur 5a gezeigten Ausführungsform ist die Folie 11 auf die Gassackwandung 3 innenseitig geklebt oder geschweißt. Anstelle der Einprägungen 15 hat die Folie 11 einen kreisförmigen Flächenabschnitt 18 im Bereich der Ausströmöffnung 9, der eine geringere Dicke als der verbleibende Flächenabschnitt aufweist. Damit soll sichergestellt sein, daß die Folie 11 nicht am Rand, sondern stets im Bereich ihrer Mitte zuerst aufreißt, nachdem sie sich bei einem höheren Innendruck nach außen durch die Ausströmöffnung 9 hindurch ausdehnt (Figur 5b). Eine Positionieröffnung 19 in der Folie 11 dient dem lagesicheren Halten der Folie 11 bei ihrem Befestigen an der Gassackwandung 3. Ein nicht gezeigter pneumatisch ausfahrbarer Aufnahmedorn tritt dazu durch die Positionieröffnung 19 hindurch, woraufhin die Folie 11 im Bereich ihres Außenrandes an die Gassackwandung 3 angenäht, geklebt oder geschweißt wird. Die Positionieröffnung 19 weist lediglich einen Durchmesser von etwa 3 mm auf, was den Verlauf des Gassackinnendrucks bis zum Reißen der Folie 11 nicht nennenswert beeinflußt.

Anstatt eine oder mehrere Positionieröffnungen 19 im Bereich der Ausströmöffnung 9 vorzusehen, ist es ebenso möglich, wie in Figur 6 gezeigt, eine oder vorzugsweise zwei Positionieröffnungen 19 im Bereich des Außenrandes der Folie 11 vorzusehen, die mit entsprechenden Positionieröffnungen in der Gassackwandung 3 und in einem Verstärkungsring 16 fluchten. Durch sämtliche Positionieröffnungen hindurch erstreckt sich bei der Herstellung des Gassacks 1 ein entsprechender aus- und einfahrbarer Aufnahmedorn, der die Teile zueinander positioniert.

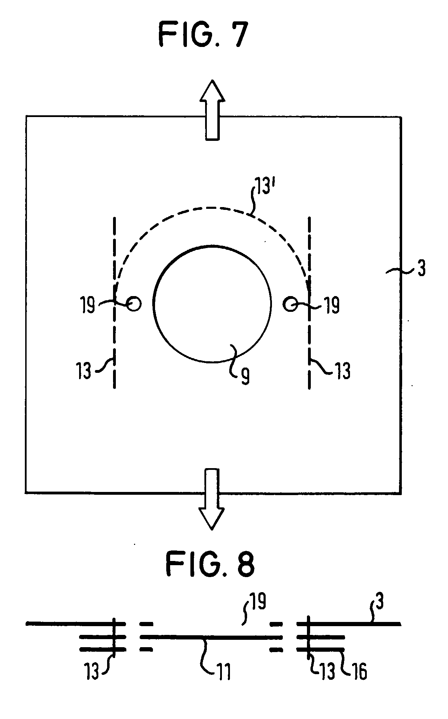

In Fig. 7 ist ein quadratischer Ausschnitt der Gassackwandung 3 dargestellt. Die beiden entgegengesetzten Pfeile sollen die Hauptzugrichtung in der Gassackwandung 3 bei entfaltetem Gassack darstellen. Da aufgrund dieses Zuges bereits eine Belastung der Folie 11 auftritt, die ein nicht vorbestimmbares Zerstören der Folie 11 herbeiführen könnte, ist die Folie 11 nur in bestimmten Bereichen an der Gassackwandung 3 befestigt. Im Inneren ist ein Verstärkungsring 16, wie er zuvor beschrieben ist, vorgesehen, der die Folie 11 zwischen sich und der Gassackwandung 3 hält. Eine Möglichkeit, damit auf die Folie 11 möglichst wenig Zugkräfte in der Gassackwandung 3 übertragen werden, besteht darin, parallel zur Zugrichtung an beiden Seiten der Ausströmöffnung 9 Nähte 13 vorzusehen. Eine weitere Möglichkeit besteht darin, eine halbkreisbogenförmige Naht 13' vorzusehen, die ein gewisses Verschieben der Folie 11 relativ zur Gassackwandung 3 zuläßt. Bei dieser Ausführungsform wird sichergestellt, daß nur der Gassackinnendruck auf die Folie 11 wirkt und zu ihrem Zerstören führt.

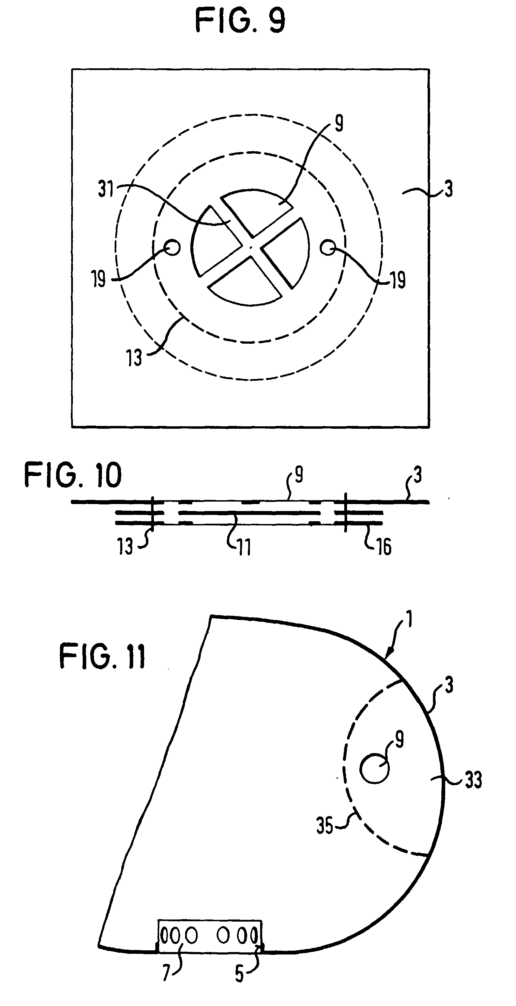

Bei der in den Figuren 9 und 10 dargestellten Ausführungsform sind sowohl der Haltering 16 als auch die Gassackwandung 3 nicht kreisringförmig, sondern kreissegmentförmig ausgeschnitten, wobei sich die aneinandergrenzenden kreissegmentförmigen Öffnungen zur Austrittsöffnung 9 ergänzen. Bei dieser Ausgestaltung überbrücken Halteteile 31 aus Gewebematerial die Ausströmöffnung 9. Diese Halteteile 31 kreuzen sich in der Mitte und verbinden gegenüberliegende Bereiche der Gassackwandung 3 miteinander. Dadurch wird die Form der Ausströmöffnung 9 beim Auslassen von Gas stabilisiert. Ferner wird, wie bei der Ausführungsform nach Fig. 7, keine Zugkraft über die Gassackwandung 3 in die Folie 11 eingeleitet. Das Ausschneiden der Gassackwandung 3 zum Erreichen der vier kreissegmentförmigen Öffnungen erfolgt mittels Laser.

Bei der in Fig. 11 gezeigten Ausführungsform ist ein Außenbereich 33 des Gassacks, der die Ausströmöffnung 9 aufweist, abgenäht. Eine Reißnaht 35 verbindet hierzu gegenüberliegende Bereiche der Gassackwandung 3. Beim Aufblasen des Gassacks wird der Bereich 33 nicht aufgeblasen, so daß kein Gas über die Ausströmöffnung 9 entweichen kann. Beim Auftreffen des Insassen auf den Gassack entsteht jedoch ein sehr hoher Gassackinnendruck, der zum Zerstören der Reißnaht 35 führt. Gas strömt anschließend in den Bereich 33 und über die Ausströmöffnung 9 ins Freie. Der Insasse prallt dadurch auf einen relativ weichen Gassack. Es können auch mehrere Reißnähte 35 vorgesehen sein, und die Reißnaht 35 kann auch mehrere und nicht nur zwei Lagen der Gassackwandung 3 miteinander verbinden. Damit beim Ausströmen des Gases über die Ausströmöffnungen 9 der Gassack nicht unsymmetrisch zusammenfällt und der Insasse an ihm entlanggleitet, sind vorzugsweise mehrere, symmetrisch von dem Fahrzeuginsassen aus gesehen angeordnete Ausströmöffnungen 9 an den Seiten des Gassacks vorgesehen.

## Patentansprüche

1. Gassack für ein Fahrzeuginsassen-Rückhaltesystem, mit einer Gassackwandung (3), die wenigstens eine Ausströmöffnung (9) aufweist, welche durch ein sie abdeckendes, an der Gassackwandung (3) befestigtes Materialstück bis zu einem vorbestimmten Gassackinnendruck verschlossen ist und bei einem Überschreiten des Innendrucks durch Aufreißen des Materialstücks freigegeben wird, dadurch gekennzeichnet, daß das Materialstück eine Folie (11) ist.

2. Gassack nach Anspruch 1, dadurch gekennzeichnet, daß die Folie (11) eine Metall- oder Kunststoff-Folie ist.

3. Gassack nach Anspruch 2, dadurch gekennzeichnet, daß die Folie (11) eine Aluminiumfolie ist.

4. Gassack nach einem der vorstehenden Ansprüche, dadurch gekennzeichnet, daß die Folie (11) auf die Gassackwandung (3) aufgenähnt, geklebt oder aufgeschweißt ist.

5. Gassack nach einem der vorstehenden Ansprüche, dadurch gekennzeichnet, daß die Folie (11) mit wenigstens einer Aufreißlinie versehen ist.

6. Gassack nach Anspruch 5, dadurch gekennzeichnet, daß die Aufreißlinie durch eine Einprägung (15) gebildet ist.

7. Gassack nach einem der vorstehenden Ansprüche, dadurch gekennzeichnet, daß die Folie (11) einen im Bereich der Ausströmöffnung (9) liegenden Flächenabschnitt (18) mit verringerter Dicke gegenüber dem verbleibenden Flächenabschnitt aufweist.

8. Gassack nach einem der vorstehenden Ansprüche, dadurch gekennzeichnet, daß ein am Gassack (1) befestigter, den Rand der Ausströmöffnung (9) innenseitig umgebender Verstärkungsring (16) vorgesehen ist und daß die Folie (11) zwischen dem Verstärkungsring (16) und der Gassackwandung (3) angeordnet ist.

9. Gassack nach Anspruch 8, dadurch gekennzeichnet, daß der Verstärkungsring (16), die Folie (11) und die Gassackwandung (3) durch Nähen, Kleben oder Schweißen miteinander verbunden sind.

10. Gassack nach Anspruch 8 oder 9, dadurch gekennzeichnet, daß der Innendurchmesser des Verstärkungsrings (16) größer als der Durchmesser der in der Gassackwandung (3) vorgesehenen Ausströmöffnung (9) ist.

11. Gassack nach einem der Ansprüche 8 bis 10, dadurch gekennzeichnet, daß wenigstens ein Halteteil (31) vorgesehen ist, das die Ausströmöffnung (9) überbrückt und bezüglich der Ausströmöffnung (9) gegenüberliegende Bereiche der Gassackwandung (3) verbindet, um die Form der Ausströmöffnung (9) beim Auslassen von Gas zu stabilisieren.

12. Gassack nach Anspruch 11, dadurch gekennzeichnet, daß das Halteteil (31) ein nicht ausgeschnittener Bereich der Gassackwandung (3) ist.

13. Gassack nach Anspruch 11 oder 12, dadurch gekennzeichnet, daß der Verstärkungsring (16) mit dem Halteteil (31) versehen ist.

14. Gassack nach einem der vorstehenden Ansprüche, dadurch gekennzeichnet, daß die Befestigung der Folie (11) um die Ausströmöffnung (9) herum nicht durchgehend, sondern bereichsweise erfolgt.

15. Gassack nach einem der vorstehenden Ansprüche, dadurch gekennzeichnet, daß die Ausströmöffnung (9) in einem abgenähten Bereich (33) der Gassackwandung (3) liegt, der durch Verbinden von Lagen der Gassackwandung (3) durch wenigstens eine Reißnaht (35) definiert ist.

16. Gassack nach einem der vorstehenden Ansprüche, dadurch gekennzeichnet, daß die Folie (11) wenigstens eine Positionieröffnung (19) aufweist.

17. Gassack nach Anspruch 16, dadurch gekennzeichnet, daß der Verstärkungsring (16) und die Gassackwandung (3) jeweils wenigstens eine mit der Positionieröffnung (19) in der Folie (11) fluchtende Positionieröffnung aufweisen.
